# EUROPÄISCHE PATENTSCHRIFT

(11) **EP 2 807 787 B1**
(45) Veröffentlichungstag und Bekanntmachung des Hinweises auf die Patenterteilung: **12.09.2018**
(21) Anmeldenummer: 13702201.8
(22) Anmeldetag: 24.01.2013
(51) Int. Cl.: H04L 9/08, H04L 9/32, G07D 7/20

(54) **DOKUMENTBASIERTER SCHLÜSSEL**
DOCUMENT BASED KEY
CLEF DÉRIVÉE D'UN DOCUMENT

(30) Priorität: 24.01.2012 DE 102012201016
(43) Veröffentlichungstag der Anmeldung: 03.12.2014
(73) Patentinhaber: Bundesdruckerei GmbH, 10969 Berlin (DE)
(72) Erfinder: KULIKOVSKA, Olga, 14165 Berlin (DE); DRESSEL, Olaf, 14641 Wustermark (DE); FUMY, Walter, 91052 Erlangen (DE); KOMAROV, Ilya, 10369 Berlin (DE)
(74) Vertreter: Patentanwälte Bressel und Partner mbB
(86) Internationale Anmeldenummer: PCT/EP2013/051315
(87) Internationale Veröffentlichungsnummer: WO 2013/110692

(56) Entgegenhaltungen:
- EP-A1- 2 237 183
- EP-A2- 2 003 622
- WO-A1-2006/120643
- WO-A1-2010/118897
- WO-A2-2004/104899

## Beschreibung

Die Erfindung betrifft ein Verfahren und eine Vorrichtung zum Bereitstellen und Nutzen eines so genannten PUF-Schlüssels, der anhand eines Sicherheitsdokuments hergestellt wird. Die Buchstabenfolge PUF ist ein Akronym des Begriffs Physical Unclonable Function. Übersetzt bedeutet dies, physikalisch nicht duplizierbare Funktion. Hierdurch soll ausgedrückt werden, dass ein bestimmtes Merkmal oder eine bestimmte Eigenschaft eines Gegenstands durch eine kontrollierte Herstellung nicht duplizierbar oder gezielt herstellbar ist.

Aus dem Stand der Technik sind unterschiedliche Eigenschaften oder Merkmale bekannt, die eine solche PUF-Eigenschaft aufweisen.

Aus der US 4,218,674 sind ein Verfahren und ein System zum Verifizieren einer Authentizität zum Aufspüren von Fälschungen bekannt. Zufällig verteilte Fasern aus einem magnetischen oder magnetisierbaren Material bilden ein einzigartiges Muster. Das Muster wird detektiert, mathematisch analysiert und dem Dokument zugeordnet.

Aus der DE 10 2008 034 021 A1 ist ein Verfahren zur Herstellung eines Sicherheits- und/oder Wertdokuments mit Zufallsmuster und korrelierter Identzeichenfolge bekannt. Eine Markierungsschicht umfasst zwei verschiedene partikuläre Lumineszenzsubstanzen. Die Partikel sind zufällig verteilt. Das emittierte Licht bildet ein individuelles Zufallsmuster, dem eine Zeichenfolge zugeordnet und in einer Datenbank gespeichert bzw. auf dem Dokument als Identzeichenfolge lesbar appliziert wird.

Aus der DE 10 2008 034 022 A1 ist ein Verfahren zur Herstellung eines Sicherheits- und/oder Wertdokuments mit Teilbereichen unterschiedlicher Lumineszenzemission bekannt, bei dem eine Markierungsschicht aus einem lumineszierenden Material und einem zufällig verteilten Pigment hergestellt wird. Es tritt eine charakteristische Verstärkung oder Abschwächung der Lumineszenz auf. Dieses Muster wird einer Zeichenfolge zugeordnet und in einer Datenbank gespeichert oder auf dem Dokument als Identzeichenfolge lesbar appliziert.

Von James R. R. Buchanan et al. wurde in dem Artikel "Forgery: 'Fingerprinting' documents and packaging", Nature 436, 475, 28. Juli 2005, gezeigt, dass Oberflächen einzigartige Merkmale aufweisen, die als eine Art Fingerabdruck für das jeweilige Dokument oder eine Verpackung genutzt werden können.

Gegenstände können somit Merkmale aufweisen, die zwar gegebenenfalls durch den Herstellungsprozess beeinflusst, durch diesen jedoch nicht gezielt reproduzierbar herstellbar sind. Ein Teil dieser Merkmale kann unbeabsichtigt entstehen, wie beispielsweise die unvermeidbaren Oberflächenrauhigkeiten und Unebenheiten, oder gezielt hergestellt werden, wie beispielsweise die oben erwähnten zufällig eingebrachten lumineszierenden Substanzen oder Fasern.

Aus dem Stand der Technik ist es ferner bekannt, Dokumente gezielt mit so genannten Sicherheitsmerkmalen zu versehen, die so ausgebildet sind, dass sie eine Fälschung eines Gegenstands unmöglich machen oder zumindest sehr erschweren. Gezielt eingebrachte PUF-Merkmale bilden hierbei eine Gruppe solcher Sicherheitsmerkmale. Da diese nicht gezielt reproduzierbar sind, können diese auch nicht direkt genutzt werden, um beispielsweise einfach verifizierbare Informationen in einem Dokument zu speichern. Hierfür werden andere Sicherheitsmerkmale, beispielsweise spezielle Druckverfahren, Lasermarkierungsverfahren, Hologramme oder Ähnliches, verwendet. Darüber hinaus ist es bei einer Reihe von Sicherheitsdokumenten üblich, in diese eine elektronische Schaltung zu integrieren, welche über eine Wechselwirkung mit einem so genannten Lesegerät eine Kommunikationsverbindung ausbilden kann, über die in der elektronischen Schaltung gespeicherte Daten ausgelesen werden können. Dem Fachmann sind eine Reihe solcher Sicherheitsdokumente, die eine elektronische Schaltung, beispielsweise einen Radiofrequenzidentifikationschip (RFID-Chip), umfassen, der mit einer Antenne gekoppelt ist, bekannt.

Die in der elektronischen Schaltung gespeicherten Daten werden in der Regel mittels kryptographischer Verfahren gesichert, um ein unberechtigtes Auslesen und somit eine ungewünschte Verwendung der Daten zu verhindern.

Aus der WO 2006/120643 A1 ist ein Authentifizierungssystem für Banknoten und andere physikalische Objekte bekannt. Ein solches System umfasst das mindestens eine physikalische Objekt und eine Verifizierungsvorrichtung. Das physikalische Objekt umfasst eine zufällige Verteilung einer Vielzahl von physikalisch erfassbaren Teilchen in einem Substrat des Objekts. Gemeinsam mit dem physikalischen Objekt wird eine digitale Repräsentation der gemessenen physikalischen Eigenschaften der Teilchen einschließlich einer tatsächlichen Verteilung zumindest einiger der Teilchen gespeichert, wobei die physikalischen Eigenschaften in Reflektion und Transmission ermittelt werden. Die Verifizierungsvorrichtung umfasst eine Messeinheit zum Bestimmen der digitalen Repräsentation basierend auf den Messungen der physikalischen Eigenschaften der Teilchen, einschließlich der tatsächlichen Verteilung zumindest einiger der Teilchen durch Reflektion und Transmission und eine Vergleichseinheit zum Vergleichen der gemessenen Repräsentation mit einer gespeicherten Repräsentation. Die Repräsentation der gemessenen Eigenschaften kann ein Hashwert sein.

Aus der EP 2 237 183 A1 ist ein Verfahren für Sicherheitszwecke bekannt. Bei diesem wird ein Abfragesignal auf ein physikalisches Objekt angewendet und ein Antwortsignal des physikalischen Objekts empfangen. Das Antwortsignal umfasst eine Vielzahl von charakteristischen resonanten optischen Moden oder eine Charakteristik des Antwortsignals wird basierend auf der räumlichen Auflösung von mindestens zwei Frequenzkomponenten des Antwortsignals bestimmt, das durch einen Lumineszenzeffekt beeinflusst ist. Die innere Struktur der physikalischen Struktur kann auch ein Netzwerk aus nichtlinearen elektrischen Komponenten umfassen und mindestens eine der Komponenten für einen Empfang und eine Aussendung elektromagnetischer Strahlung angeordnet sein. Das physikalische Objekt wird schließlich mit elektrischen Kontakten für die Wechselwirkung mit einer Messvorrichtung ausgestattet.

Weitere Verfahren zur Prüfung und/oder Verifizierung von Objekten sind beschrieben in der WO 2010/118897 A1, WO 2004/104899 A2 oder EP 2 003 622 A2.

Für eine Reihe von Anwendungen ist es wünschenswert, ein Sicherheitsdokument, welches über einzelne Sicherheitsmerkmale individualisiert ist, verwenden zu können, ohne den in den individualisierenden Daten enthaltenden Inhalt ermitteln zu müssen oder ermitteln zu können. Beispielsweise bestehen die individualisierenden Daten häufig aus Angaben, die die Person kennzeichnen oder charakterisieren, der das Sicherheitsdokument zugeordnet ist. Solche Daten können beispielsweise biometrische Informationen, ein Geburtsdatum, ein Name, eine Anschrift, Kontodaten oder Ähnliches umfassen.

Der Erfindung liegt die technische Aufgabe zugrunde, Verfahren weiterzuentwickeln, in denen ein Sicherheitsdokument zum Bereitstellen von eindeutig dem Dokument zuzuordnenden Informationen verwendet werden kann, insbesondere ohne einen unmittelbaren Zugriff auf personenbezogene Daten zu gestatten oder zu benötigen.

### Grundidee der Erfindung

Der Erfindung liegt die Idee zugrunde, Eigenschaften des Sicherheitsdokuments mit einem Lesegerät auszuwerten und hieraus einen PUF-Schlüssel abzuleiten, der dem einzelnen Dokument zuordenbar ist. Hierfür werden Eigenschaften des Sicherheitsdokuments mittels unterschiedlicher Erfassungsverfahren erfasst und die so ermittelten Eigenschaften in Form von Datensätzen repräsentiert. Diese Datensätze bilden Ausgangswertdatensätze für eine so genannte Streuwertfunktion, welche im englischsprachigen Raum auch Hashwertfunktion genannt werden, wobei die Streuwertfunktion vorzugsweise eine Einwegfunktion ist. Streuwertfunktionen weisen die Eigenschaft auf, dass sie einem Satz von Daten, der hier in Form von Ausgangswertdatensätzen bereitgestellt wird, auf eindeutige Weise einen Zielwert zuweisen. Dieselben Ausgangswerte führen, bei Anwendung derselben Streuwertfunktion, jeweils zu demselben Zielwert.

Aus dem Stand der Technik sind unterschiedliche Streuwertfunktionen bzw. Streuwertfunktionsalgorithmen bekannt, die aus einer beliebig mächtigen Menge alphanumerischer geordneter Zeichen einen Hashwert vorgegebener Stellenzahl alphanumerischer Zeichen erzeugt. Eine Streuwertfunktion im Sinne der hier beschriebenen Erfindung zeichnet sich dadurch aus, dass anhand des Streuwertes nicht unmittelbar auf den Ausgangsdatensatz bzw. die einzelnen Ausgangsdatensätze zurückgeschlossen werden kann. Bevorzugt werden Einweg-Streufunktionen verwendet, bei denen der Rückschluss nicht möglich ist, oder zumindest kein Rechenweg hierfür bekannt ist. Somit ist es möglich, anhand einzelner Eigenschaften und Merkmale eines Sicherheitsdokuments, die einzeln für sich gegebenenfalls fertigungstechnisch reproduzierbar beeinflusst werden könnten, in Kombination ein PUF-Merkmal in Form eines solchen Hashwerts zu erzeugen.

### Definitionen

Eine Streuwertfunktion, welche auch als Hashwertfunktion bezeichnet werden kann und gegebenenfalls mittels eines Algorithmus umgesetzt ist und deshalb auch als Hashwert- bzw. Streuwertalgorithmus bezeichnet wird, ist eine Abbildung h:K→S, wenn gilt |K|≥|S|. K repräsentiert die Menge der Daten bzw. Ausgangsdaten, die gehasht, d.h. mittels der Streuwertfunktion, abgebildet werden. S ist die Menge der Hashwerte, welche auch als Schlüssel bezeichnet werden. Die Menge der Ausgangsdaten ist bei einer Hashfunktion somit größer als die Menge der Schlüssel bzw. Hashwerte. Als Hashfunktionen im Sinne der hier beschriebenen Erfindung ist jedoch nur eine Teilmenge der Hashfunktionen gemäß der allgemeinen Definition gemeint. Ein Rückschluss auf die Ausgangswerte bzw. Ausgangsdatensätze soll nicht oder nur mit sehr großem Rechenaufwand möglich sein.

Wird als weiteres Merkmal gefordert, dass die Hashwertfunktion eine so genannte Einwegfunktion ist, so ist ein Rückschluss nicht möglich oder zumindest ein Verfahren hierfür unbekannt. Dies bedeutet, dass anhand des Schlüssels nicht auf die Ausgangsdaten zurückgeschlossen werden kann. Zu beachten ist, dass diese Eigenschaft nicht davor schützt, anhand einer Brute-Force-Methode die Hashwerte für alle möglichen Ausgangsdaten zu ermitteln und über einen Schlüsselvergleich die zu dem Schlüssel gehörigen Ausgangsdaten zu ermitteln. Besonders gut geeignete Hashfunktionen weisen weitere Eigenschaften auf, beispielsweise dass kleine Veränderungen der Ausgangsdaten, beispielsweise bei einer langen mehrstelligen Zahl oder einem alphanumerischen Satz, ein Ändern einer Stelle oder eines Zeichens eine starke Veränderung des zugehörigen Schlüssels bewirkt. Weitere wünschenswerte Eigenschaften sind eine Kollisionsresistenz, was bedeutet, dass es praktisch nicht möglich ist, zu einem gegebenen Paar bestehend aus Ausgangsdatensatz und Schlüssel (beispielsweise Hashwert) einen anderen Ausgangsdatensatz zu finden, für den die Hashwertfunktion denselben Schlüssel (Hashwert) liefert, oder sogar eine Kollisionsfreiheit, welche bedeutet, dass zu jedem Schlüssel nur ein Ausgangsdatensatz existiert. Zusammengefasst ist somit festzustellen, dass eine Hash- oder Streuwertfunktion im Sinne des hier Beschriebenen solche Streuwertfunktionen sind, die zugleich Einwegfunktionen sind. Beispiele hierfür sind die aus der Kryptographie bekannten als Algorithmen umgesetzten Funktionen/Methoden wie SHA oder andere in der Normenfamilie ISO/IEC 10118 beschriebene Funktionen und Algorithmen, um nur einige zu nennen.

Als Kommunikationsverfahren werden hier Verfahren bezeichnet, die gemäß eines festgelegten Protokolls Daten austauschen.

Ermittlungsverfahren sind alle Verfahren, die eine Eigenschaft ermitteln. Ein solches Ermittlungsverfahren kann zum einen eine Messung oder ein Erfassen von Daten umfassen. Zusätzlich kann eine Auswertung der Daten umfasst sein.

Als optisch wahrnehmbare Eigenschaften werden jene Eigenschaften bezeichnet, die mit einem Messverfahren, welches Licht und eine Wechselwirkung von Licht mit einer Messeinrichtung nutzt, erfasst werden. Als Licht wird hier eine elektromagnetische Dipolstrahlung angesehen, die im infraroten, optischen (sichtbaren) oder ultravioletten Wellenlängenbereich liegt. Optische Messverfahren sind solche Messverfahren, die beispielsweise eine Lumineszenz, ein Remissionsspektrum, eine Reflektivität, eine Transmission, eine holographische Rekonstruktion oder Ähnliches vermessen oder erfassen. Auch ein Erfassen einer 2D-Abbildung wird als optisches Messverfahren bezeichnet.

Folglich werden im Sinne dies hier beschriebenen Verfahrens die elektromagnetische Dipolstrahlung im UV-, IR- oder sichtbaren Wellenlängenbereich genutzt, nicht als elektromagnetische Messverfahren angesehen, sondern in Abgrenzung als optische Messverfahren. Optische Messverfahren umfassen insbesondere auch auf einer flächigen Abbildung eines Objekts beruhende Messverfahren, bei denen ein zumindest zweidimensionales Bild des Objekts erfasst wird. Eine Vermessung von magnetischen Eigenschaften oder eine Absorption von elektromagnetischer Strahlung außerhalb des UV-Wellenlängenbereichs, des IR-Wellenlängenbereichs oder des sichtbaren Wellenlängenbereichs stellt jeweils ein elektromagnetisches Messverfahren dar.

Verfahren, die die elektrische und/oder magnetische Wechselwirkung ausnutzen und keine elektrische Dipolstrahlung im UV-, IR- oder sichtbaren Wellenlängenbereich verwenden werden hier als elektromagnetische Messverfahren bezeichnet.

Eine PIN ist eine persönliche Identifikationsnummer, worunter hier jede alphanumerisch codierte Sequenz verstanden wird.

Ein Sicherheitsdokument ist jedes Dokument, dass mindestens ein Merkmal umfasst, welches eine Verfälschung, Nachbildung, Duplizierung usw. erschwert oder unmöglich macht. Beispiele für Sicherheitsdokumente umfassen Pässe, Zugangskarten, ID-Karten, Führerscheine, Fahrzeugpapiere, aber auch Banknoten, Wertzeichen, Kreditkarten, Tickets um nur einige zu nennen.

In der folgenden Beschreibung wird zum Teil der verkürzte Begriff Dokument verwendet, wobei dieser immer als Sicherheitsdokument zu verstehen ist.

### Bevorzugte Ausführungsformen

Insbesondere wird ein Verfahren zum Bereitstellen eines PUF- Schlüssels geschaffen, welches die Schritte umfasst: Bereitstellen eines Dokuments; Bereitstellen eines Lesegeräts; Erfassen von mindestens zwei Eigenschaften des Dokuments mit Hilfe eines Lesegeräts, wobei für jede erfasste Eigenschaft ein Datensatz bereitgestellt wird, der die erfasste Eigenschaft repräsentiert, wobei die mindestens zwei Eigenschaften mittels unterschiedlicher Ermittlungsverfahren erfasst werden, und Errechnen des PUF-Schlüssels mittels einer Streuwertfunktion, die eine Einwegfunktion ist und die beim Erfassen der Eigenschaften bereitgestellten Datensätze als Ausgangswerte verwendet. Ein so bereitgestellter PUF-Schlüssel kann beispielsweise verwendet werden, um das Dokument selbst und hierüber einen zugeordneten Nutzer zu identifizieren. Beispielsweise kann das Lesegerät ausgestaltet sein, ein Sicherheitsdokument jedes Mal, wenn es erneut in einen Prüfbereich des Lesegeräts gebracht wird, zu erkennen. Der ermittelte PUF-Schlüssel kann somit in übergeordneten Verfahren zur weiteren Absicherung der Authentizität eines Dokuments oder der hieraus ausgelesenen persönlichen Daten genutzt werden. Werden beispielsweise in einem übergeordneten Verfahren mittels desselben Lesegeräts personalisierte Informationen ermittelt und beispielsweise in einer Transaktion zum Auslösen eines Geldtransfers verwendet, so kann der PUF-Schlüssel beispielsweise als zusätzliche Sicherheit genutzt werden, dass ein Sicherheitsdokument, welches dahingehend dupliziert ist, dass es die personalisierten Daten korrekt enthält, dennoch nicht für die Transaktion genutzt werden kann, da der anhand der mittels unterschiedlicher Messverfahren ermittelten Eigenschaften abgeleitete PUF-Schlüssel nicht identisch ist. Dieses hat seine Ursache darin, dass die einzelnen Eigenschaften nicht alle in Kombination reproduzierbar sind, oder durch einen Fälscher nicht alle vollständig erfasst werden können. Selbst wenn ein Fälscher zusätzlich zu den personalisierten Daten in den Besitz des von dem Lesegeräts ermittelten PUF-Schlüssels gelangt, kann er aufgrund der Eigenschaft, dass die verwendete Streuwertfunktion eine Einwegfunktion ist, nicht auf die Eigenschaften zurückschließen, die mittels des Lesegeräts vermessen wurden. Der ermittelte PUF-Schlüssel ist ein dokumentbasierter Schlüssel, der von den Eigenschaften des Dokuments abhängig ist. Ein bereitgestellter PUF-Schlüssel kann auch als Schlüssel für die Ver- und/oder Entschlüsselung von Daten in einem übergeordneten Kommunikationsverfahren verwendet werden.

Erfindungsgemäß ist vorgesehen, dass eines der mindestens zwei Ermittlungsverfahren ein optisches Messverfahren zum Ermitteln einer optischen wahrnehmbaren Eigenschaft umfasst und ein anderes der mindestens zwei Ermittlungsverfahren ein Messverfahren zum Ermitteln einer nicht optisch wahrnehmbaren Eigenschaft, beispielsweise einer elektromagnetischen oder mechanischen Eigenschaft des Dokuments umfasst. Als optisch wahrnehmbare Eigenschaften werden jene Eigenschaften bezeichnet, die mit einem Messverfahren, welches Licht und eine Wechselwirkung von Licht mit einer Messeinrichtung nutzt, erfasst werden. Als Licht wird hier eine elektromagnetische Dipolstrahlung angesehen, die im infraroten, optischen (sichtbaren) oder ultravioletten Wellenlängenbereich liegt. Optische Messverfahren sind solche Messverfahren, die beispielsweise eine Lumineszenz, ein Remissionsspektrum, eine Reflektivität, eine Transmission, eine holographische Rekonstruktion oder Ähnliches vermessen oder erfassen.

Bei einer bevorzugten Weiterbildung ist vorgesehen, dass zumindest eine der erfassten Eigenschaften bereits selbst eine PUF-Eigenschaft des Sicherheitsdokuments ist. Dies bedeutet, dass diese Eigenschaft im Herstellungsprozess nicht reproduzierbar nachgebildet werden kann. Ein solches Merkmal kann beispielsweise durch ein Muster zufällig auf ein Dokument aufgebrachter Fasern, Lumineszenzstoffe oder Ähnliches gebildet sein.

Messverfahren, die nicht optisch wahrnehmbare Eigenschaften erfassen, können beispielsweise eine Leitfähigkeit, magnetische Eigenschaften, Kapazitäten, ein Gewicht oder Ähnliches erfassen. Messverfahren, welche elektrische, elektronische und/oder magnetische Eigenschaften vermessen, werden hier als elektromagnetische Messverfahren aufgefasst, sofern diese nicht elektrische Dipolstrahlung im UV-, IR- oder sichtbaren Wellenlängenbereich auswerten.

Ein Teil nicht primär optischer Merkmale, beispielsweise eine Oberflächenrauhigkeit oder Abmessungen eines Dokuments, lassen sich zum Teil auch optisch unter Ausnutzung einer Wechselwirkung von Licht mit dem Dokument vermessen. Andere Messverfahren können diese Eigenschaften jedoch auch nichtoptisch erfassen. Je nachdem, ob eine Wechselwirkung mit Licht verwendet wird, wird das jeweilige Merkmal hier als ein optisch wahrnehmbares oder auch als ein optisch nicht wahrnehmbares Merkmal angesehen bzw. behandelt.

Sofern Rohmesswerte, beispielsweise Helligkeitswerte einer CCD-Kamera, die einen Ausschnitt oder die gesamte Oberfläche des Dokuments erfasst, ausgewertet werden, um eine Eigenschaft zu ermitteln, so werden keine personenbezogenen Informationen extrahiert oder ermittelt und als Eigenschaft erfasst. Sehr wohl ist es jedoch möglich, beispielsweise solche Pixelwerte statistisch auszuwerten, indem beispielsweise auftretende Ortsfrequenzen in Form eines Ortsfrequenzspektrums beispielsweise mittels eines Einsatzes einer Waveletanalyse ermittelt werden. Auch andere statistische Auswertungen können vorgenommen werden, um eine Eigenschaft des Dokuments zu ermitteln und einen die Eigenschaft repräsentierenden Datensatz zu erzeugen.

Um eine Auswertbarkeit der optisch erfassten Eigenschaften, beispielsweise im Hinblick auf den damit codierten Inhalt unmöglich zumachen, ist bei einer Ausführungsform vorgesehen, dass das Erfassen der Eigenschaften des Dokuments eine optische, bildliche Erfassung eines Bereich oder der gesamten Oberfläche des Dokuments umfasst, wobei die Erfassung jedoch in der Weise erfolgt, dass keine scharfe Abbildung erfasst wird, die ein Ableiten der persönlichen Codierten Informationen ermöglicht. Beispielsweise kann das Erfassen mit einer Optik erfolgen, deren Abstand von Erfassungssensoren, welche das Bild erfassen, beispielsweise den Pixeln eines CCD-Chips so bemessen ist, dass eine schafe Abbildung auf den Pixeln nicht erfolgt. Die Bildebene der Optik weicht beispielsweise von der Ebene der Sensoreinrichtung (eines CCD-Kamerachips) ab. Es entstehen somit nur unscharfe Bilder auf dem Kamerasensor.

Die Abbildungsoptik kann auch so ausgebildet sein, dass diese bei der flächigen bildlichen Erfassung eines Dokuments unterschiedliche Bereiche oder Gebiete des Dokuments in unterschiedliche Bildebenen abgebildet und der Erfassungssensor nur Sensorelemente in einer Erfassungsebene umfasst. Alternativ kann der Erfassungssensor in unterschiedlichen Erfassungsebenen angeordnete Sensorelemente aufweisen, die für eine flächige und vorzugsweise zeitgleiche Erfassung eines Bereichs des Dokuments ausgebildet sind. Auch hierbei kann eine Abbildungsoptik so ausgeführt sein, dass diese das Sicherheitsdokument in eine einzige Abbildungsebene oder lokal in verschiedene von den Erfassungsebenen abweichende Abbildungsebenen abbildet. Auch bei diesem Beispiel werden nur einzelne oder keine Gebiete oder Bereiche des Dokuments scharf auf Sensorelemente abgebildet, die übrigen Gebiete oder Bereiche werden alle nicht scharf, d.h. unscharf, abgebildet.

Eine Optik, die eine Oberfläche des Dokuments in unterschiedliche Bildebenen abbildet, kann beispielsweise über ein Mikrolinsenarray ausgebildet werden, welches Mikrolinsen mit unterschiedlichen Brennweiten umfasst.

Bei einer Ausführungsform kann ein Lesegerät so ausgebildet sein, dass eine Linse oder mehrere Linsen eine Abbildung auf eine Erfassungsvorrichtung, beispielsweise einen Kamerachip, einen CCD-Chip oder einen CMOS-Chip oder etwas Ähnliches, in der Weise bewirkt oder bewirken, dass eine Bildebene nie mit der Erfassungsebene der jeweiligen Erfassungsvorrichtung zusammenfällt. Zusätzlich kann das Lesegerät eine Dokumentaufnahme umfassen, die eine Anordnung des Dokuments in einer Position verhindert, von der aus eine scharfe Abbildung der Oberfläche möglich wäre.

Bei einer Ausführungsform ist vorgesehen, dass das Erfassen der einen der mindestens zwei Eigenschaft ein Erfassen einer 2D-Abbildung umfasst, wobei eine Ebene des Sicherheitsdokuments unscharf auf eine 2D-Bilderfassungseinrichtung abgebildet und von dieser erfasst wird, so dass die in der Ebene des Sicherheitsdokuments grafisch gespeicherte Information nicht aus der erfassten 2D-Abbildung ableitbar ist

Bei einer Ausführungsform eines Lesegeräts ist vorgesehen, dass eine der mindestens zwei Messeinrichtungen ausgebildet ist, zumindest einen Bereich des Sicherheitsdokuments optisch zu erfassen, wobei eine Abbildungsoptik der mindestens einen Erfassungseinrichtung ausgebildet ist, den Bereich nicht vollständig scharf auf eine 2D-Bilderfassungseinrichtung abzubilden.

Eine Weiterbildung sieht vor, dass die Abbildungsoptik ein Mikrolinsenarray umfasst, dessen Mirkolinsen unterschiedliche Brennweiten aufweisen, sodass von einem erfassten Bereich einer Ebene des Sicherheitsdokuments nur einzelne Gebiete oder einzelne Punkte oder gar keine Gebiete oder gar keine Punkte des erfassten Bereichs in eine Bildebene abgebildet werden, die mit einer Erfassungsebene der 2D-Bilderfassungeinrichtung zusammenfällt, wobei die Gebiete oder Punkte, deren Bildebene gegebenenfalls mit der Erfassungsebene zusammenfallen, so in der Ebene des Dokuments angeordnet sind, dass eine in der Ebene gespeicherte grafische Information anhand der in den scharf abgebildeten Gebieten oder scharf abgebildeten Punkten dargestellten Anteile diese Information nicht ableitbar ist.

Zur Ableitung einer Eigenschaft des Sicherheitsdokuments kann eine unscharfe 2D-Abbildung mittels statistischer Verfahren ausgewertet werden. Eine Helligkeitswert-Statistik, auftretenden Raumfrequenzen usw. können ausgewertet werden und das Auswerteergebnis den Datensatz liefern, der die entsprechende Eigenschaft des Sicherheitsdokuments repräsentiert.

Eine Ausführungsform des Verfahrens, welche im Zusammenhang mit Dokumenten einsetzbar ist, welche mindestens eine elektronische Schaltung umfassen, sieht vor, dass zusätzlich mittels eines Kommunikationsverfahrens in der elektronischen Schaltung gespeicherte oder vorliegende Daten aus dem Dokument ausgelesen werden und diese Daten oder ein Teil hiervon als ein weiterer Ausgangsdatensatz in die Berechnung des PUF-Schlüssels mittels der Streuwertfunktion einbezogen werden. Hierbei können erneut ausgelesene Daten verwendet werden, die nicht unmittelbar personenbezogen sind, nicht entschlüsselt werden bzw. nicht einer Person zugeordnet werden können. Ebenso ist es möglich, mit einer Kommunikation in Zusammenhang stehende Eigenschaften zu erfassen und auszuwerten. Die einzelnen gleichartigen elektronischen Schaltungen und Antennen in unterschiedlichen Dokumenten weisen in der Regel Variationen auf, die sich als physikalische Messwerte ermitteln lassen. Beispielsweise wird ein Signal zu Rauschverhältnis durch eine Güte des Antennenschwingkreises in dem Sicherheitsdokument beeinflusst, aber auch Faktoren wie die exakte Resonanzfrequenz oder Ähnliches lassen sich vermessen. Zufällig eingebrachte magnetische oder magnetisierbare Partikel können beispielsweise ein Resonanzverhalten und/oder eine Induktivität einer Antenne beeinflussen. Des Weiteren kann das Einschaltverhalten der dokumentinternen Schaltung gemessen werden. Je nach interner Elektronik ergibt sich ein anderer charakteristischer Verlauf.

Um sicherzustellen, dass die personenbezogenen Daten erst nach einer Authentifizierung korrekt ausgelesen werden können und der Datensatz, der in eine Ermittlung des PUF-Schlüssels einbezogen wird, keine vollständigen und missbräuchlich verwendbaren Daten umfasst, ist bei einer Ausführungsform vorgesehen, dass die elektronische Schaltung so ausgebildet ist, dass ohne ein Vorliegen eines korrekt ermittelten PUF-Schlüssels nur einzelne, nicht zusammenhängende Bits des Speicherbereichs ausgelesen werden können, in dem die persönlichen Daten jeweils in zusammenhängenden Bit-Bereichen gespeichert sind. Werden die persönlichen Daten beispielsweise in Form von Bytes, gespeichert, die jeweils 8 Bits umfassen, so ist bei einer Ausführungsform vorgesehen, dass nur eines dieser Bits auslesbar ist, bei einer 8-Bit-Datenleitung ist bei einer Ausführungsform somit beispielsweise vorgesehen, dass nur die einer Datenleitung zugeordneten Bits ohne das Vorliegen des korrekten PUF-Schlüssels aus elektronischen Schaltungen, beispielsweise eines Mikrochips, ausgelesen werden können. Bei anderen Ausführungsformen können auch mehrere, jedoch nicht alle Bits auslesbar sein.

Bei einer Ausführungsform ist vorgesehen, dass diese nur bitweise und auszugsweise ausgelesenen elektronischen Daten einen Datensatz bilden, der in die Berechnung des PUF-Schlüssels mit einbezogen wird. Diese die gespeicherten Daten auszugsweise repräsentierenden Bits stellen somit eine Eigenschaft des Dokuments dar.

Bei einer Ausführungsform ist vorgesehen, dass mindestens eine der mindestens zwei Eigenschaften aus einer in dem Sicherheitsdokument grafisch oder elektronisch logisch gespeicherten Information abgeleitet wird, wobei eine Erfassung in der Weise erfolgt, dass die gespeicherte Information in den erfassten Daten nicht enthalten ist oder aus diesen ableitbar und nicht in dem abgeleiteten, die eine der mindestens zwei Eigenschaften des Sicherheitsdokuments repräsentierenden Datensatz enthalten ist.

Bei manchen Anwendungen ist es wünschenswert, dass beispielsweise nach dem Verlust des Sicherheitsdokuments dieses nicht durch eine dritte Person unautorisiert genutzt werden kann. Daher ist bei manchen Ausführungsformen vorgesehen, dass zusätzlich eine persönliche Identifikationsnummer oder ein persönlicher Identifikationscode, welche hier zusammengefasst als PIN bezeichnet wird, erfasst wird. Die Erfassung kann einerseits in dem Lesegerät selbst erfolgen. Hierfür kann beispielsweise eine Eingabevorrichtung vorgesehen sein, welche beispielsweise als Tastatur, als virtuelle Tastatur auf einem berührungsempfindlichen Touchscreen oder Ähnliches umgesetzt sein kann. Ebenso ist es möglich, die PIN über eine Nutzerbeeinflussung des Dokuments selbst zu erfassen. Beispielsweise können auf dem Dokument oder in das Dokument Eingabemittel integriert sein, beispielsweise in Form von druckempfindlichen Schaltern, oder andere Verfahren gewählt werden, bei denen eine Nutzerinteraktion an dem Dokument seitens des Lesegeräts erfasst wird. Wird in den Dokumentkörper beispielsweise ein segmentierter Bereich mit einer metallischen Oberfläche eingebracht, so kann ein selektives Auflegen von Fingern auf einzelne der Segmente dazu führen, dass diese hinsichtlich ihrer Temperatur gegenüber der Umgebungstemperatur durch die Wechselwirkung mit dem menschlichen Nutzer verändert werden. Dieser Temperaturunterschied kann anschließend durch eine optische Erfassung des Dokuments bzw. des segmentierten Bereichs ermittelt werden, sofern diese Abbildung im infraroten Wellenlängenbereich ausgeführt wird. Einerseits kann die PIN eigenständig als Authentifizierungscode und/oder als Dokumentschlüssel genutzt werden, um aus der elektronischen Schaltung gesicherte Informationen auszulesen und eventuell entschlüsseln zu können. Andererseits kann die erfasste PIN auch gemeinsam mit einzelne erfasste Eigenschaften repräsentierenden Datensätzen mittels der Streuwertfunktion oder einer weiteren Streuwertefunktion zu einem Dokumentschlüssel verarbeitet werden, der dann genutzt werden kann, um diese gesicherten Informationen auszulesen und gegebenenfalls kryptographisch zu entschlüsseln.

Bei diesen Informationen, die aus der elektronischen Schaltung ausgelesen werden, kann es sich auch um Informationen handeln, die das Dokument selbst zur Integritätsprüfung ermittelt hat. Beispielsweise sind Verfahren bekannt, die in einem Dokument ausgeführt werden, um durch intern ausgeführte Messungen eine Integrität und Unverfälschtheit des Dokuments zu prüfen. Ein solches Verfahren ist beispielsweise in der
DE 10 2010 020 460 beschrieben. Beispielsweise kann ein Muster von in das Dokument integrierten Fasern ausgewertet werden, um zu prüfen, ob die in das Dokument integrierte elektronische Schaltung sich nach wie vor in ihrer ursprünglichen Umgebung in dem Dokument befindet. Hierbei wird davon ausgegangen, dass das Fasermuster zufällig und kartenspezifisch ist und somit selbst ein PUF-Merkmal darstellt. Die ausgelesenen Daten, die mittels eines Kommunikationsverfahrens ermittelt werden, können somit ein internes PUF-Merkmal repräsentieren. Diese Daten können mittels einer PIN und/oder des Dokumentenschlüssels geschützt oder ungeschützt vorliegen und mittels des Lesegeräts lesbar ausgestaltet sein.

Die Verwendung einer PIN kann jedoch alternativ oder zusätzlich genutzt werden, um den eigentlichen erzeugten PUF-Schlüssel zu modifizieren, d.h. die PIN kann in die Berechnung des PUF-Schlüssels mittels der Streuwertfunktion mit einbezogen werden. Hierbei muss die PIN nicht dem Dokument zugeordnet sein, sondern kann vielmehr im Zusammenhang mit einer Transaktion stehen, für welche der erzeugte PUF-Schlüssel verwendet werden soll. Hierdurch wird beispielsweise ebenfalls verhindert, dass ein Dokumentverlust einen Dritten dazu befähigt, das Dokument für eine solche Transaktion zu missbrauchen.

Bei einer Ausführungsform ist vorgesehen, dass die erfasste PIN einen Datensatz bildet, der in die PUF-Schlüsselberechnung mit einbezogen wird. Die PIN kann dem Dokument bei einer Ausführungsform fest zugeordnet sein. Dann stellt die PIN quasi eine Eigenschaft des Dokuments dar.

Eine noch höhere Sicherheit des PUF-Schlüssels wird erreicht, wenn in die Berechnung des PUF-Schlüssels zusätzlich ein Code eingeht, den das Lesegerät über eine Schnittstelle erfasst hat. Ein solcher extern übermittelter Code, welcher vorzugsweise über ein Datenkommunikationsnetz, beispielsweise das Internet, ein Telefonnetz oder Ähnliches, ausgetauscht wird, kann alternativ oder zusätzlich zu einer von dem Nutzer über das Dokument und/oder das Lesegerät eingegebenen PIN verwendet werden. Dieser Code wird vorzugsweise beispielsweise für einen Anwendungsfall, bei dem der PUF-Schlüssel zur kryptographischen Übertragung von Daten genutzt werden soll, individuell für die Datenübertragungssitzung bzw. sogar nur für einen Zeitabschnitt, in dem die Datenübertragung stattfindet, festgelegt.

Bei einer Ausführungsform wird der PUF-Schlüssel verwendet, um in dem elektronischen Schaltkreis gespeicherte Daten für eine Kommunikation mit einer Gegenseite zu verschlüsseln. Die Sicherheit wird dann bei einer Ausführungsform dadurch erhöht, dass die zur PUF-Schlüsselerzeugung notwendigen Schritte einschließlich der Erfassung der Eigenschaften des Dokuments iterativ ausgeführt werden, so lange eine verschlüsselte Kommunikation mit der Gegenseite unterhalten wird. Bei dieser Ausführungsform ist es möglich, dass sich der PUF-Schlüssel dann ändert, wenn beispielsweise die Gegenseite einen neuen externen Code übermittelt. Bei einem so ausgestalteten Verfahren besitzt der erzeugte PUF-Schlüssel immer nur eine begrenzte zeitliche Gültigkeit und nur für eine spezielle Kommunikationsverbindung. Ein Entfernen des Dokuments aus dem Lesegerät während der Datenübertragung über die Kommunikationsverbindung führt bei dieser Ausführungsform zu einer Unterbrechung oder einem Abbruch der Kommunikationsverbindung.

Die Verfahren zur Erfassung von Eigenschaften des Dokuments können beispielsweise ein zweidimensionales Bilderfassungsverfahren umfassen, bei dem das Bild nicht in der Bildebene einer Abbildungsoptik erfasst wird, so dass keine Ableitung von Informationen aus dem erfassten Bild möglich ist, die in Form von kognitiv erfassbaren alphanumerischen Zeichen auf dem Dokument gespeichert sind. Als kognitiv erfassbare alphanumerische Zeichen werden solche alphanumerischen Zeichen verstanden, die ein Nutzer bei einer Betrachtung ohne zusätzliche technische Hilfsmittel wahrnehmen und erfassen kann, so dass dieser diese alphanumerischen Zeichen sich zumindest abschnittsweise merken und, ohne einen direkten Blick auf das Dokument werfen zu können, beispielsweise handschriftlich reproduzieren könnte.

Das optische Messverfahren kann bei einer anderen Ausführungsform ein oder mehrere der folgenden Verfahrensschritte umfassen: Bestimmen eines Frequenzspektrums der remittierten und/oder reflektierten Strahlung des Dokuments, Bestimmen eines Ortsfrequenzspektrums einer erfassten Abbildung des Dokuments, ein Erfassen und Auswerten einer zeitaufgelösten remittierten oder emittierten Strahlung als Antwort auf eine Stimulation, wobei unterschiedliche Stimulationen möglich sind, beispielsweise über ein elektrisches Feld, Einstrahlen von elektromagnetischer Strahlung, Anlegen eines Magnetfelds usw.

Das elektromagnetische Messverfahren kann einen oder mehrere der folgenden Schritte umfassen: Messen eines Frequenzspektrums einer nicht optischen elektromagnetischen Strahlung, Messen von kapazitiven Kopplungen des Dokuments an das Lesegerät und/oder von in dem Dokument vorhandenen Kapazitäten, Messungen einer Leitfähigkeit, Messungen einer Induktivität oder mehrerer Induktivitäten usw.

Ebenso ist es möglich, beispielsweise ein Gewicht des Dokuments zu ermitteln, dessen Abmessung zu bestimmen, eine Oberflächenrauheit abzutasten oder Ähnliches.

Ebenso ist es möglich, Ultraschallsignale einzukoppeln oder auf die Karte einzustrahlen und die Schallantworten in Reflexion und/oder Transmission auszuwerten.

Ebenso ist es möglich, die einzelnen hier beschriebenen Verfahren in Kombination zu verwenden, um Eigenschaften des Dokuments zu erfassen und jeweils mittels eines Datensatzes zu repräsentieren, welche dann gemeinsam als Ausgangswerte für die PUF-Schlüsselberechnung mittels der Streuwertfunktion bzw. des Streuwertalgorithmus genutzt werden. Beispielsweise kann eine optische Messung bei Einkopplung von Ultraschallsignalen in das Dokument ausgeführt werden.

Erfindungsgemäß wird somit ein Lesegerät geschaffen, welches mindestens zwei Messeinrichtungen umfasst, die unterschiedliche Eigenschaften eines Dokuments erfassen können und in Form eines Datensatzes bereitstellen, die dann in einer Auswerteeinrichtung unter Verwendung einer Streuwertfunktion oder eines Streuwertalgorithmus in einen PUF-Schlüssel umgerechnet werden. Wie oben beschrieben, kann dieses Lesegerät weitergebildet werden, um das oben beschriebene Verfahren auszuführen. Hierfür kann das Gerät weitere Messeinrichtungen, beispielsweise zum Ausführen einer Kommunikation, mit einem in dem Dokument integrierten elektronischen Schaltkreis umfassen. Ferner können Ausführungsformen Eingabemittel für eine PIN, eine Schnittstelle zum Empfangen eines externen Codes und/oder Übermitteln des PUF-Schlüssels umfassen.

Bei einer Ausführungsform umfasst das Lesegerät eine Recheneinheit, die in der Lage ist, anhand des ermittelten PUF-Schlüssels eine Verschlüsselung von Daten vorzunehmen, d.h. unverschlüsselte Daten zu empfangen, diese zu verschlüsseln und verschlüsselt weiterzuleiten. Ebenso kann die Verschlüsselungseinrichtung so ausgebildet sein, dass sie zusätzlich oder alternativ verschlüsselte Daten empfängt, mittels des PUF-Schlüssels entschlüsselt und unverschlüsselt weiterleitet. Hierfür kann das Lesegerät mehrere Schnittstellen umfassen. Hierbei können die unverschlüsselten Daten über eine Schnittstelle, beispielsweise eine kabelgebundene USB-Schnittstelle, empfangen und versenden und die verschlüsselten Daten über eine weitere Schnittstelle, welches beispielsweise eine WAN-Schnittstelle ist, empfangen und versenden. USB steht hierbei für Universal Serial Bus und WAN für Wide Area Network.

Nachfolgend wird die Erfindung unter Bezugnahme auf eine Zeichnung näher erläutert. Hierbei zeigen:
- Fig. 1: eine schematische Darstellung eines Dokuments in einem Lesegerät;
- Fig. 2: eine schematische Darstellung zur Erläuterung der Erzeugung eines PUF-Schlüssels;
- Fig. 3: ein Ablaufdiagramm zum Erzeugen eines PUF-Schlüssels;
- Fig. 4: eine weitere schematische Darstellung zur Erzeugung eines PUF-Schlüssels, der zur Datenverschlüsselung genutzt wird;
- Fig. 5: ein weiteres schematisches Ablaufdiagramm zum Erzeugen eines PUF-Schlüssels;
- Fig. 6: noch eine schematische Darstellung zur Verwendung des Verfahrens für eine Zugangskontrolle; und
- Fig. 7: ein weiteres schematisches Ablaufdiagramm zum Erzeugen eines PUF-Schlüssels und Verwendung des PUF-Schlüssels zum Austauschen von verschlüsselten Daten.

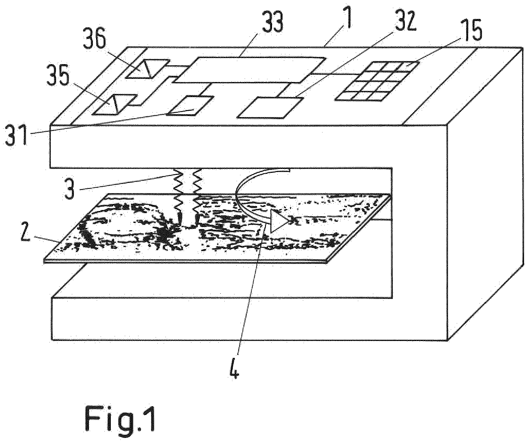

In Fig. 1 ist schematisch ein Lesegerät 1 dargestellt, in welches ein Sicherheitsdokument 2 in Form einer Karte eingeführt ist. Das Sicherheitsdokument 2 wird anhand verschiedener Messverfahren hinsichtlich seiner Eigenschaften vermessen. Beispielsweise wird eine Eigenschaft mittels eines optischen Messverfahrens ermittelt, was über zwei geschlängelte Pfeile 3 angedeutet ist. Ein weiteres Messverfahren vermisst beispielsweise eine Induktivität der Karte, nutzt somit ein elektromagnetisches Messverfahren, welches mittels eines gekrümmten Doppelpfeils 4 angedeutet ist. Die mindestens zwei auf diese Weise ermittelten Eigenschaften des Dokuments 2, welche vorzugsweise so genannte PUF-Merkmale sind, deren konkrete Ausgestaltung nicht reproduzierbar in einem Herstellungsverfahren nachgebildet werden kann, werden mittels Datensätzen repräsentiert. Anhand dieser Datensätze, die zusammen einen Ausgangsdatensatz für eine Streuwertfunktionsberechnung bzw. eine Anwendung eines Streuwertalgorithmus (Hashwertalgorithmus) bilden, wird durch die Anwendung dieser Streuwertfunktion ein PUF-Schlüssel errechnet. Dieser PUF-Schlüssel ergibt sich eindeutig aus den ermittelten Eigenschaften bzw. den diese Eigenschaften repräsentierenden Datensätzen. Es wird jeweils eine so genannte Einwegfunktion verwendet. Dies bedeutet, dass anhand des errechneten PUF-Schlüssels nicht auf die Eigenschaften bzw. die diese Eigenschaften repräsentierenden Datensätze zurückgeschlossen werden kann. Der so ermittelte PUF-Schlüssel ist bei geeigneter Wahl der Streuwertefunktion einzigartig und lässt sich durch ein manipuliertes Dokument nicht erzeugen oder nicht in vorhersagbarer Weise erzeugen, sofern zwei unterschiedliche Ausgangsdatensätze mit der Streuwertefunktion denselben PUF-Schlüssel erzeugen können.

Das Lesegerät 1 umfasst bei der beschriebenen Ausführungsform mindestens zwei Erfassungseinrichtungen 31, 32 zum Ausführen der mindestens zwei unterschiedlichen Erfassungsverfahren, die unterschiedliche Messverfahren nutzen.

Eine der Erfassungseinrichtungen, z.B. die Erfassungseinrichtung 31, ist vorzugsweise als optische Erfassungseinrichtung ausgebildet. Bei einer Ausführungsform ist diese Erfassungseinrichtung 31 ausgebildet, eine flächige Abbildung eines Ausschnitts oder der gesamten Oberfläche des Sicherheitsdokuments 2 zu erfassen. Die Erfassungseinrichtung 31 weist hierfür eine Bilderfassungseinrichtung (nicht gesondert dargestellt) auf, die beispielsweise einen CCD-Chip, einen CMOS-Chip oder Ähnliches umfasst, mit der ein 2D-Bild erfasst werden kann. Die Erfassungseinrichtung 31 weist zusätzlich bei einer bevorzugten Ausführungsform eine Abbildungsoptik auf, mit der eine scharfe Abbildung des Ausschnitts oder der gesamten Oberfläche auf die Bilderfassungseinrichtung nicht möglich ist. Die Abbildungsoptik kann aus einer oder mehreren Linsen bestehen. Bei anderen Ausführungsformen umfasst die Abbildungsoptik ein Mikrolinsenarray mit Mirkolinsen unterschiedlicher Brennweite, sodass auch hier keine scharfe Abbildung einer in dem Sicherheitsdokument enthaltenen Information auf die Bilderfassungseinrichtung möglich ist. Ebenso so ist es möglich, dass mittels des Mikrolinsenarrays nur einzelne nicht zusammenhängende Teilbereiche des Sicherheitsdokuments 2 auf die Bilderfassungseinrichtung abgebildet werden. Allen hier beschriebenen Ausführungsformen ist gemeinsam, dass ein Inhalt einer in grafischer Form gespeicherten Information nicht erfasst wird und aus dem erfassten Datensatz auch nicht abgeleitet werden kann.

Ferner umfasst das Lesegerät eine Auswerteeinrichtung 33, die anhand der beim Erfassen der Eigenschaften des Dokuments 2 erzeugten Datensätze mittels einer Streuwertfunktion einen PUF-Schlüssel erzeugt. Die Auswerteeinrichtung 33 ist vorzugsweise mittels einer Programmgesteuerten Recheneinrichtung umgesetzt. Ferner umfasst das Lesegerät eine, beispielsweise als USB-Schnittstelle ausgebildete, lokale Schnittstelle 35 sowie eine Schnittstelle 36, die beispielsweise als Netzwerkschnittstelle zu einem WAN (Wide Area Network) ausgebildet ist. Das WAN kann das Internet, ein Telefonnetz oder Ähnliches sein. Die Auswerteeinrichtung 33 kann ausgebildet sein, mittels des PUF-Schlüssels unverschlüsselte Daten, die über die lokale Schnittstelle 35 ausgetauscht werden, zu verschlüsseln und über die Schnittstelle 36 verschlüsselt zu versenden und über die Schnittstelle 36 empfangene verschlüsselte Daten mittels des PUF-Schlüssels zu entschlüsseln und die lokale Schnittstelle 35 auszugeben. Andere Ausführungsformen können auch nur über eine Schnittstelle verfügen. Die Auswerteeinrichtung kann auch ausgebildet sein, den erzeugten PUF-Schlüssel zu verifizieren. Hierzu können beispielsweise Daten über die Schnittstelle 36 mit einer entfernten Datenbank (nicht dargestellt) ausgetauscht werden.

Wie weiter unten erläutert, umfasst die dargestellte Ausführungsform des Lesegeräts 1 eine Eingabevorrichtung in Form einer Tastatur 15.

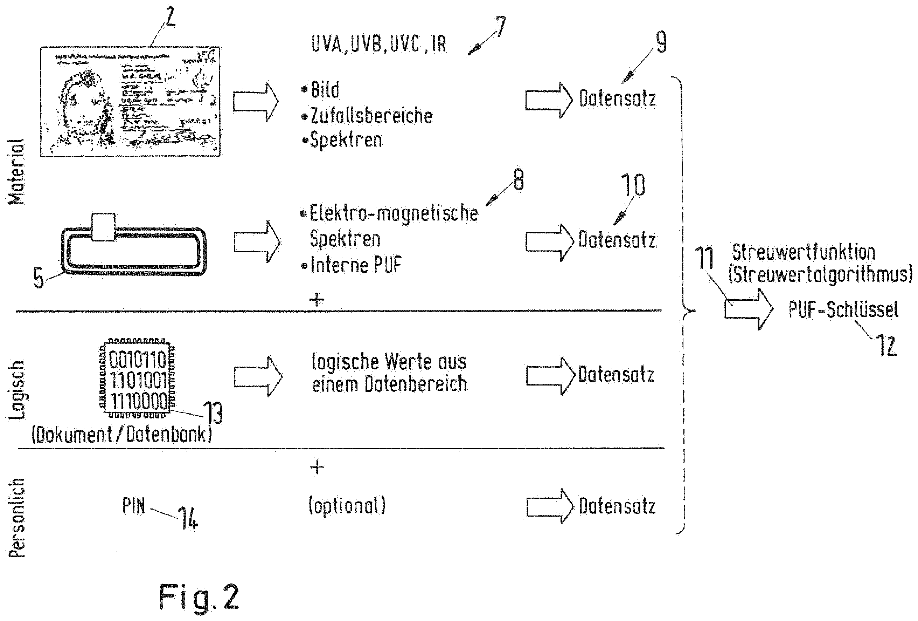

Anhand von Fig. 2 soll eine weitere Ausführungsform der Erzeugung eines PUF-Schlüssels erläutert werden. An dem Sicherheitsdokument 2 werden optisch erfassbare Eigenschaften oder Merkmale als ein Bestandteil eines Verfahrens erfasst. Hierbei können Messungen im sichtbare, UVA-, UVB-, UVC- und/oder infraroten Wellenlängenbereich vorgenommen werden. Beispielsweise können Abbildungen oder Spektren erfasst werden, ein Transmissionsverhalten und ein Reflexionsverhalten in unterschiedlichen Wellenlängenbereichen sowie ein Auftreten von Lumineszenzen und Ähnlichem untersucht werden. Ebenso ist es möglich, zeitaufgelöste Messungen auszuführen, um beispielsweise ein Abklingverhalten einer Lumineszenz auszuwerten. Die hier beschriebene Ausführungsform des Verfahrens umfasst mindestens ein optisches Messverfahren 7, das mindestens einen die Eigenschaft des Dokuments repräsentierenden Datensatz 9 liefert. Ferner wird davon ausgegangen, dass das Dokument mindestens eine elektrische Schaltung 5 umfasst. Eine zweite Eigenschaft des Dokuments 2 wird mittels eines elektromagnetischen Messverfahrens 8 ermittelt. Beispielsweise kann eine Induktivität einer Antenne der elektronischen Schaltung 5 vermessen werden, eine spektrale Antwort auf eingestrahlte elektromagnetische Strahlung unterschiedlicher Frequenzen ausgewertet werden sowie deren zeitlicher Verlauf oder Ähnliches. Darüber hinaus ist es möglich, beispielsweise ein Antwortverhalten eines Kommunikationsverfahrens auszuwerten und die hierbei erhaltenen Rohdaten als Eigenschaft oder die Eigenschaft repräsentierenden Datensatz zu verwenden. Ebenso ist es beispielsweise möglich, bei einem Sicherheitsdokument 2, welches so ausgestaltet ist, dass es selbst aktiv mittels der elektronischen Schaltung ein so genanntes internes PUF-Merkmal auswertet, dieses Auswerteergebnis aus der elektronischen Schaltung auszulesen. Ein Beispiel für die Ermittlung eines so genannten internen PUF-Merkmals ist in der DE 10 2010 020 460 beschrieben. Die anhand der unterschiedlichen verwendeten Messverfahren 7, 8, welche in Fig. 2 schematisch durch Messverfahrensangaben bzw. Eigenschaften angedeutet sind, liefern die die Eigenschaften repräsentierenden Datensätze 9, 10. Zumindest anhand dieser mindestens zwei Datensätze 9, 10, gegebenenfalls jedoch mehr als zwei Datensätzen, wird mittels einer Streuwertfunktion bzw. dem Ausführen eines Streuwertalgorithmus 11 dann ein PUF-Schlüssel 12 ermittelt. Dieser kann verwendet werden, beispielsweise um das Dokument 2 zu identifizieren oder über einen Vergleich des PUF-Schlüssels 12 mit einem Wert aus einer Datenbank das Dokument zu verifizieren.

Ebenso ist es möglich, dass der PUF-Schlüssel in dem Lesegerät gespeichert wird und das Lesegerät 1 nach und nach die Sicherheitsdokumente 2 einlernt, die diesem regelmäßig zur Verifizierung "angeboten" werden. Wird dem Lesegerät 1 ein Dokument 2 vorgelegt, dessen PUF-Schlüssel nicht bekannt ist, so kann dieses eine weitere Prüfungsprozedur auslösen, um eine weitergehende Verifikation des Dokuments 2 und gegebenenfalls der Person einzuleiten, der dieses Dokument 2 zugeordnet ist. So können solche Lesegeräte 1, die selbständig anhand eines so ermittelten PUF-Schlüssels 12 die Dokumente 2 einlernen, die für eine Zugangskontrolle zu einem Bereich genutzt werden, beispielsweise Personal an einer Zugangsschleuse benachrichtigen, sobald der Zugang mit einer Karte angestrebt wird, die dem Lesegerät 1 bisher nicht bekannt ist.

Wie in Fig. 2 angedeutet ist, können in die Berechnung des PUF-Schlüssels 12 auch logische Daten 13, z. B. binäre Werte aus einem binären Datensatz, insbesondere nur eine Auswahl von Werten aus einem solchen Datensatz, welche in dem Dokument 2 gespeichert sind und/oder von einer externen Stelle bereitgestellt werden, sowie eine gegebenenfalls erfasste PIN 14 mit in die Ermittlung des PUF-Schlüssels 12 mit einbezogen werden. Hierbei kann die PIN 14 zusätzlich in dem Verfahren zum Erfassen der logischen Daten 13 zur Steuerung einer Zugriffsberechtigung auf diese logischen Daten genutzt werden, beispielsweise beim Auslesen aus der elektronischen Schaltung 5 des Dokuments 2 und/oder aus einer externen Datenbank. Vorzugsweise werden als logische Daten keine vollständigen Datensätze in der Weise genutzt, dass diese oder deren Inhalt eindeutig einer Person zuordenbar ist. Beispielsweise werden nur bestimmte Bits eines Binärendatensatzes oder bestimmte Speicherzellen aus einem Speicherbereich ausgelesen, so dass deren Wert zwar durch die persönlichen Daten beeinflusst ist, jedoch deren tatsächlicher Inhalt nicht ermittelbar ist. Die PIN 14 wird auf Korrektheit geprüft. Nur wenn diese verifiziert ist, wird der Zugriff gestattet. Die PIN 14 kann alternativ oder zusätzlich als kryptographischer Schlüssel verwendet werden.

Zum Erfassen der PIN kann das Lesegerät 1, wie Fig. 1 zeigt, beispielsweise eine Tastatur 15 umfassen, welche mittels Tasten oder auch eines berührungsempfindlichen Touchscreens ausgebildet sein kann. Alternativ kann die PIN 14 über eine Manipulation des Dokuments 2 seitens des Nutzers erfasst werden. Beispielsweise kann durch ein Auflegen von Fingern an unterschiedlichen vordefinierten Stellen des Dokuments 2 und einer anschließenden Erfassung eines ortsaufgelösten Wärmespektrums der Karte eine manuelle PIN-Eingabe erfolgen. Die erfolgte Manipulation der Karte liegt in dem Fingerauflegen an den vorbestimmten Positionen. Diese weisen eine andere Temperatur als die Umgebung auf. Die Positionen, an denen Finger aufgelegt waren, sind somit identifizierbar. Den Positionen zugeordnete Werte bilden dann die PIN. Alternativ zu einer PIN kann auch ein biometrisches Merkmal des Nutzers, beispielsweise sein Fingerabdruck oder ein Irismuster, erfasst werden. Hierfür ist das Lesegerät dann mit der geeigneten Hardware, nämlich einem Fingerabdruckscanner oder einem Irisscanner, ausgerüstet. Bevorzugt werden die biometrischen Merkmale so erfasst, dass sie der Person nicht zugeordnet werden können. Die einzelnen Möglichkeiten können alternativ oder auch in Kombination miteinander verwendet werden.

Auch bei dem im Zusammenhang mit der Fig. 2 beschriebenen Verfahren wird der eine Datensatz 9 mittels eines optischen Messverfahrens in der Weise erfasst, dass möglicherweise in dem Sicherheitsdokument codierte persönliche Informationen in dem Datensatz nicht enthalten sind. Auch die Rohdatenerfassung erfolgt vorzugsweise so, dass ein solches Ableiten der persönlichen Informationen nicht möglich ist oder wäre.

Auch das Auslesen der logischen Daten 13 erfolgt vorzugsweise so, dass codierte persönliche Informationen nicht ausgelesen werden. Ein in dem Sicherheitsdokument enthaltener Mikrochip ist beispielsweise so ausgebildet, dass dieser aus den Datenbytes jeweils nur einzelne Bits auslesen kann, ohne dass diesem ein korrekter PUF-Schlüssel bereitgestellt wird. Somit ist aus den erfassten logischen Daten keine Rekonstruktion oder Ableitung der persönlichen Daten möglich. Erst nach dem korrekten Berechnen des PUF-Schlüssels, in dessen Berechnung Teile der gespeicherten Daten mit eingegangen sind, kann die vollständige Information in Form der vollständigen Daten ausgelesen werden.

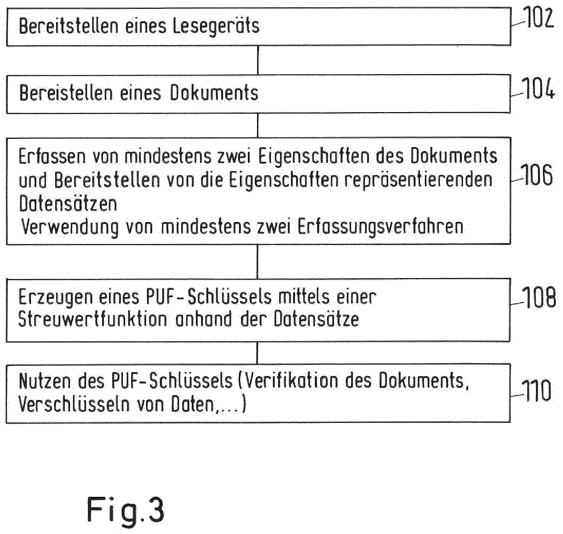

In Fig. 3 ist ein schematisches Ablaufdiagramm eines Verfahrens zum Erzeugen eines PUF-Schlüssels schematisch dargestellt. Zunächst wird ein Lesegerät bereitgestellt 102. Zusätzlich wird ein Dokument bereitgestellt 104, zu welchem ein PUF-Schlüssel erstellt werden soll. Mittels des Lesegeräts werden Eigenschaften des Dokuments erfasst und die die Eigenschaften repräsentierenden Datensätze bereitgestellt 106. Dieses umfasst das Erfassen von mindestens zwei Eigenschaften mittels mindestens zwei unterschiedlichen Messverfahren. Die die Eigenschaften repräsentierenden Datensätze werden genutzt, um anhand einer Streuwertfunktion einen PUF-Schlüssel zu erzeugen 108. In der Regel erfordert das Berechnen einer Streuwertfunktion über ein Ausführen eines Streuwertalgorithmus, der die unterschiedlichen Datensätze bzw. die in den Datensätzen enthaltenen Daten verarbeitet. Der so bereitgestellte PUF-Schlüssel, welcher eindeutig durch die physikalischen Eigenschaften des Dokuments festgelegt ist, kann anschließend für unterschiedlich ausgestaltete Verfahrensschritte 110 genutzt werden, beispielsweise zur Verifizierung des Dokuments, zur Verschlüsselung von Daten usw.

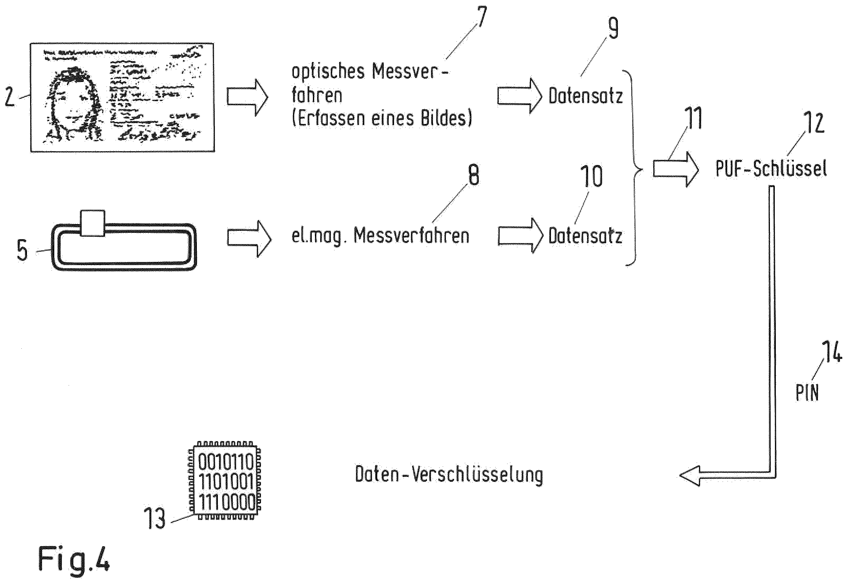

In Fig. 4 ist schematisch ein weiteres Nutzungsszenario eines erfindungsgemäßen Verfahrens und dessen Ausgestaltung schematisch dargestellt. Gleiche technische Merkmale sind in den unterschiedlichen Figuren mit denselben Bezugszeichen versehen. Die mit identischen Bezugszeichen versehenen Merkmale und Eigenschaften sind im Zusammenhang mit den unterschiedlichen Figuren nicht mehrfach beschrieben, um eine knappe präzise Darstellung der Erfindung zu ermöglichen. Es versteht sich jedoch, dass die im Zusammenhang mit einer Ausführungsform beschriebenen Merkmale, welche in der anderen Figur dieselben Bezugszeichen tragen, dieselben Funktionen erfüllen und dieselben Ausgestaltungsmöglichkeiten besitzen, sofern nicht ausdrücklich etwas anderes explizit offenbart ist. Bei dem in Fig. 4 dargestellten Ausführungsbeispiel werden von dem Dokument 2, welches eine elektronische Schaltung 5 umfasst, erneut anhand eines optischen Messverfahrens 7 und anhand eines elektromagnetischen Messverfahrens 8 mindestens zwei Eigenschaften erfasst und die die Eigenschaften repräsentierenden Datensätze 9, 10 bereitgestellt, anhand derer dann ein PUF-Schlüssel 12 mittels eines Ausführens eines Streuwertalgorithmus 11 erzeugt wird. Gemeinsam mit einer erfassten PIN 14 werden bei dieser Ausführungsform in dem Dokument gespeicherte oder andere Daten 13 ver- und entschlüsselt.

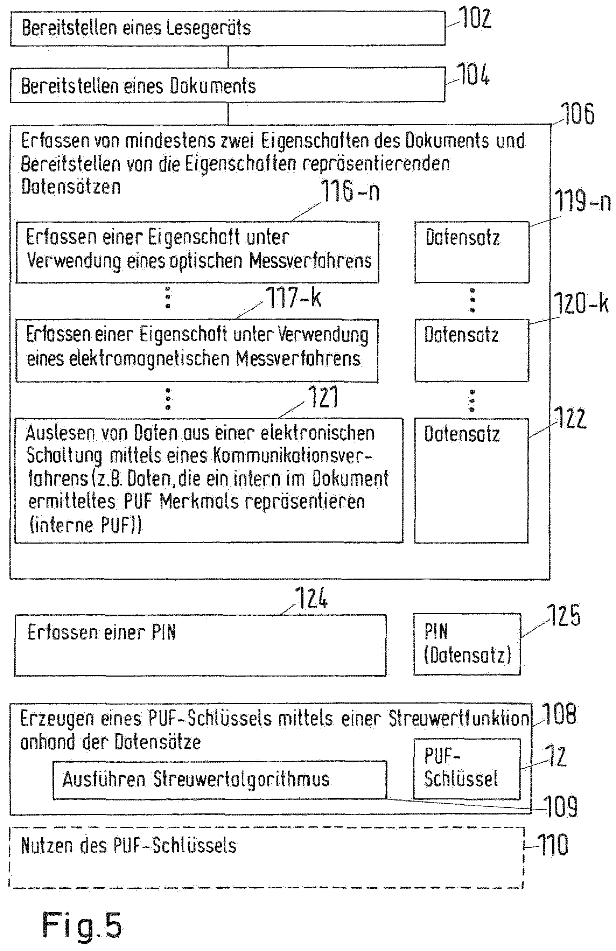

In Fig. 5 ist schematische eine Weiterbildung des Algorithmus nach Fig. 3 dargestellt. Gleiche technische Merkmale sind erneut mit denselben Bezugszeichen versehen. Erneut werden ein Lesegerät und ein Sicherheitsdokument bereitgestellt 102, 104. Mittels des Lesegeräts werden unterschiedliche Eigenschaften des Dokuments erfasst und die die Eigenschaften repräsentierende Datensätze bereitgestellt 106. Die einzelnen unterschiedlichen Eigenschaften des Dokuments werden zum einen mit optischen Messverfahren 116-n erfasst und in Form von Datensätzen 119-n bereitgestellt und andererseits mittels elektromagnetischer Messverfahren 117-k vermessen bzw. erfasst und in Form von diese Eigenschaften repräsentierenden Datensätzen 120-k bereitgestellt. Zusätzlich kann ein Kommunikationsverfahren genutzt werden 121, um Daten aus der elektronischen Schaltung auszulesen, beispielsweise Daten, welche ein intern ermitteltes PUF-Merkmal repräsentieren. Bevorzugt wird ein Ermittlungsverfahren eingesetzt welches einen Datensatz, der aus mehreren logischen Werten besteht, die einen Rückschluss auf gespeicherte persönliche Daten nicht ermöglichen, ermittelt oder ausliest. Die mittels des Kommunikationsverfahrens oder des Ermittlungsverfahrens ausgelesene oder ermittelte Eigenschaft wird ebenfalls in Form eines Datensatzes 122 bereitgestellt. An dieser Stelle wird darauf hingewiesen, dass die Eigenschaften alle seitens des Lesegeräts ermittelt werden. Die intern ermittelte PUF stellt eine Eigenschaft des Sicherheitsdokuments dar, die dieses beim Ausführen des Kommunikationsverfahrens 121 in Form von Daten bereitstellt. Es können jedoch auch andere elektronisch ausgetauschte Daten zur Ableitung einer Eigenschaft des Dokuments genutzt werden. Unterschiedliche elektronische Schaltungen können beispielsweise unterschiedliche Antworten im Rahmen eines Kommunikationsprotokolls oder eines Ermittlungsverfahrens senden, die dann genutzt werden, um als eine Eigenschaft in Form eines Datensatzes 122 bereitgestellt zu werden.

Zusätzlich wird bei dem Verfahren nach Fig. 5 eine PIN erfasst 124, welche ebenfalls in Form eines Datensatzes 125 bereitgestellt wird. Unterschiedliche Möglichkeiten zur Erfassung einer PIN sind bereits oben im Zusammenhang mit Fig. 1 und 2 erläutert worden. Die so anhand der ermittelten Eigenschaften des Dokuments und der erfassten PIN bereitgestellten Datensätze werden anschließend genutzt, um den dokumentspezifischen PUF-Schlüssel zu ermitteln 108, welches erneut unter Verwendung einer Streuwertfunktion bzw. dem Ausführen eines Streuwertalgorithmus erfolgt 109. Der PUF-Schlüssel 12 wird dann anschließend verwendet 110.

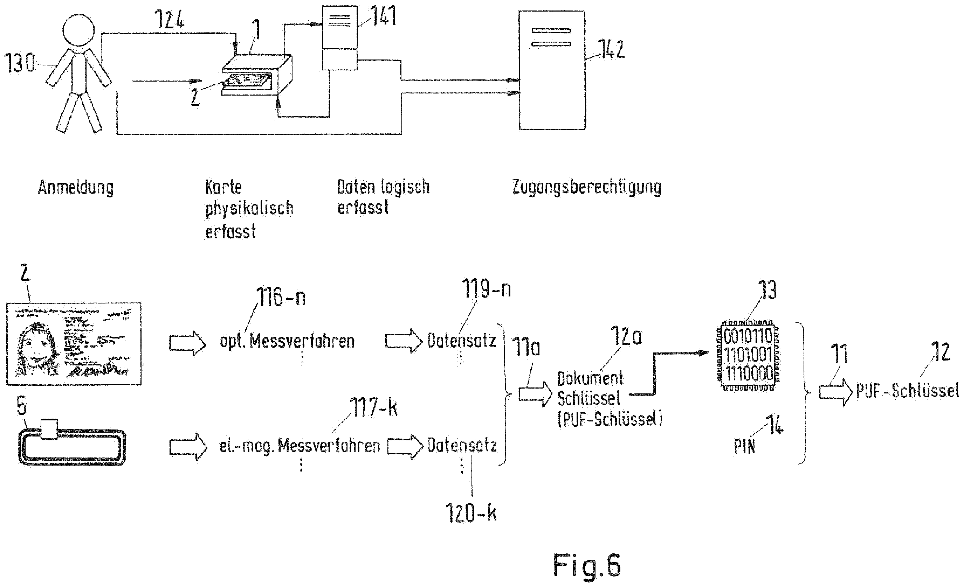

In Fig. 6 ist ein weiteres Nutzungsszenario und eine verfahrensmäßige Ausgestaltung der Erfindung schematisch dargestellt. Ein Nutzer 130 führt ein Dokument 2 in ein Lesegerät 1 ein. Dieses ermittelt, wie oben beschrieben, mindestens zwei Eigenschaften des Dokuments 2. Erneut wird wie schematisch angedeutet mindestens eine Eigenschaft mittels eines optischen Messverfahrens 116-n und eine Eigenschaft mittels eines elektromagnetischen Messverfahrens 117-k ermittelt. Anhand der diese Eigenschaften repräsentierenden Datensätze 119-n, 120-k wird ein erster Dokumentschlüssel 12a ermittelt, vorzugsweise anhand einer weiteren Streuwertfunktion 11a. Dieser Dokumentenschlüssel 12a wird dann verwendet, um verschlüsselte logische Daten beispielsweise aus einem Speicher eines Rechners auslesen und entschlüsseln zu können oder um Daten 13 aus dem elektronischen Schaltkreis 5 des Dokuments 2 auslesen zu können. Zusätzlich wird eine PIN erfasst 124, die zusätzlich oder alternativ genutzt werden kann, um die logischen Daten aus dem Speicher oder dem Dokument auszulesen. Bei der dargestellten Ausführungsform werden die ermittelten logischen Daten zusätzlich mit der PIN genutzt, um den PUF-Schlüssel 12 zu erzeugen. Hierfür wird erneut eine Streuwertfunktion verwendet. Die Streuwertfunktion 11 kann dieselbe wie die zur Berechnung des Dokumentschlüssels 12 verwendete, weitere Streuwertfunktion 11a oder eine andere sein. Entweder werden nur die ausgelesenen logischen Daten gemeinsam mit der PIN in dem Streuwerteverfahren genutzt oder zusätzlich noch die ermittelten Eigenschaften direkt mit einbezogen. Der ermittelte PUF-Schlüssel kann dann beispielsweise für eine Zugangskontrolle verwendet werden, wobei beispielsweise über einen lokalen Rechner 141 mit einer auf einem entfernten Rechner 142 befindlichen Datenbank Daten ausgetauscht werden. Durch die Nutzung der PIN wird sichergestellt, dass bei einem Verlust des Sicherheitsdokuments dennoch keine dritte Person Zugang zu einem geschützten Bereich erhalten kann.

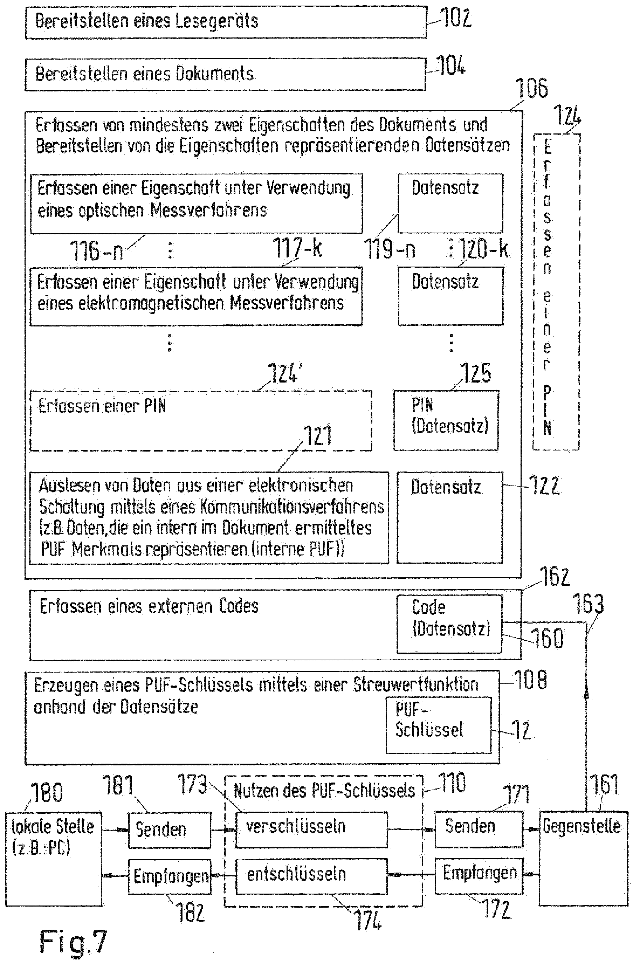

In Fig. 7 ist ein weiteres Ablaufdiagramm eines Verfahrens ähnlich zu dem nach Fig. 5 schematisch dargestellt. Erneut wird ein Lesegerät bereitgestellt und ein Dokument bereitgestellt 102, 104. Wie bei dem Verfahren nach Fig. 5 werden unterschiedliche Eigenschaften des Dokuments erfasst 106. Hierbei werden unterschiedliche Messverfahren, insbesondere mindestens ein optisches Messverfahren 116-n und ein elektromagnetisches Messverfahren 117-k, genutzt und die ermittelten Eigenschaften mittels Datensätzen 119-n, 120-k repräsentiert. Eine PIN kann entweder mittels eines Messverfahrens als eine Manipulation an dem Dokument 2 erfasst werden 124' oder unmittel an der Leseeinrichtung oder einer weiteren Einrichtung erfasst werden 124, welche dann die PIN als Datensatz 125 bereitstellen. Bei dem dargestellten Verfahren wird die PIN im Rahmen eines Kommunikationsverfahrens genutzt, um Daten aus der mindestens einen elektronischen Schaltung des Dokuments 2 auszulesen 121, wobei anhand der ausgelesenen Daten ein weiterer Datensatz 122 bereitgestellt wird. Zusätzlich wird in dem dargestellten Verfahren ein externer Code 160 von einer Gegenstelle 161 erfasst 162. Die unterschiedlichen ermittelten, die Eigenschaften des Dokuments repräsentierenden Datensätze 119-n, 120-k, 122 sowie die erfasste PIN 125 werden gemeinsam mit dem externen Code 160 mittels einer Streuwertfunktion zu dem PUF-Schlüssel 12 verarbeitet 108. Dieser wird genutzt, um zu der Gegenstelle 161 verschlüsselte Daten vordem Senden 171 zu verschlüsseln 173 bzw. verschlüsselte Daten, die von der Gegenstelle 161 empfangen werden172, zu entschlüsseln 174. Diese können beispielsweise von einer lokalen Stelle 180, z.B. einem PC, gesendet 181 und empfangen 182 werden.

Dieses Verfahren zeichnet sich dadurch aus, dass das Erfassen der Eigenschaften des Dokuments 106, mit Ausnahme des Erfassens der PIN 124', 124, iterativ ausgeführt werden, solange die Verbindung zur Verschlüsselung 173 und Entschlüsselung 174 aufrechterhalten wird. Ebenso wird, sofern die Gegenstelle 161 einen neuen externen Code 160 bereitstellt 163, dieser in die PUF-Schlüsselerzeugung 108 mit einbezogen. Hierdurch kann sichergestellt werden, dass die Übertragung nur solange stattfinden kann, wie auch tatsächlich das ursprüngliche Dokument in dem Lesegerät enthalten ist.

Eine gesteigerte Sicherheit beruht darauf, dass die Gegenstelle 161, welche die Eigenschaften des Dokuments und die PIN kennt oder die PIN anhand der Eigenschaft errechnen kann, gemeinsam mit dem selbst geschickten externen Code 160 den PUF-Schlüssel 12 in der Gegenstelle selbst errechnen kann, so dass dieser zwischen der lokalen Stelle 180 und der Gegenstelle 161 nicht ausgetauscht werden muss. Doch selbst wenn der PUF-Schlüssel beispielsweise vom Lesegerät zu der lokalen Stelle 180 übermittelt werden würde, d.h. die Verschlüsselung und Entschlüsselung in der lokalen Stelle 180 erfolgt, kann der PUF-Schlüssel nur für diese Kommunikationsverbindung genutzt werden, da der PUF-Schlüssel von dem externen Code 160 , welchen die Gegenstelle 161 bereitgestellt hat, abhängig ist.

Die beschriebenen Ausführungsformen stellen beispielhafte Ausführungen dar, deren Merkmale gemeinsam miteinander kombiniert werden können, um die Erfindung auszuführen.

### Bezugszeichenliste

- 1: Lesegerät
- 2: Dokument
- 3: geschlängelte Pfeile
- 4: gekrümmter Doppelpfeil
- 5: elektronische Schaltung
- 7,8: Merkmale/Messverfahren
- 9, 10: Datensätze
- 11: Streuwertalgorithmus
- 12: Schlüssel
- 13: logische Daten
- 14: PIN
- 15: Tastatur
- 21: Rechner
- 31: Messeinrichtung
- 32: Messeinrichtung
- 33: Auswerteeinrichtung
- 35: lokale Schnittstelle (z. B. USB)
- 36: Schnittstelle (z.B. WAN)
- 102: Bereitstellen eines Lesegeräts
- 104: Bereitstellen eines Dokuments
- 106: Erfassen von Eigenschaften und Bereitstellen von die Eigenschaften repräsentierenden Datensätzen
- 108: Erzeugen eines PUF-Schlüssels mittels einer Streuwertfunktion
- 110: Nutzen des PUF-Schlüssels
- 116-n: optisches Messverfahren
- 117-k: elektronisches Messverfahren
- 119-n: Datensätze
- 120-k: Datensätze
- 121: Auslesen von Daten mittels eines Kommunikationsverfahrens
- 122: Datensatz
- 124, 124': Erfassen PIN
- 125: Datensatz
- 130: Nutzer
- 141: lokaler Rechner
- 142: entfernter Rechner
- 160: externer Code
- 161: Gegenstelle
- 162: Erfassen von Code
- 163: Bereitstellen des externen Codes
- 171: gesendete Daten
- 172: empfangene verschlüsselte Daten
- 173: Verschlüsseln der Daten
- 174: Entschlüsseln der Daten
- 180: lokale Stelle
- 181: Senden von Daten
- 182: Empfangen von Daten

## Patentansprüche

1. Verfahren zum Bereitstellen eines PUF-Schlüssels (12, 12a) umfassend die Schritte:
Bereitstellen eines Dokuments (2), welches mindestens eine elektronische Schaltung (5) umfasst;
Bereitstellen eines Lesegeräts (1);
Erfassen von mindestens zwei Eigenschaften des Dokuments (2) mit Hilfe des Lesegeräts (1), wobei für jede erfasste Eigenschaft ein Datensatz (9, 10, 119-n, 120-k) bereitgestellt wird, der die erfasste Eigenschaft repräsentiert, wobei die mindestens zwei Eigenschaften mittels unterschiedlicher Ermittlungsverfahren erfasst werden, und
Errechnen des PUF-Schlüssels (12, 12a) mittels einer Streuwertfunktion, die die beim Erfassen der Eigenschaften bereitgestellten Datensätze (9, 10, 119-n, 120-k) als Ausgangswerte verwendet,
**dadurch gekennzeichnet, dass**
eines der mindestens zwei Ermittlungsverfahren ein optisches Messverfahren (7) zum Ermitteln einer optischen Eigenschaft umfasst und ein anderes der mindestens zwei Ermittlungsverfahren ein elektromagnetisches Messverfahren (8) zum Ermitteln einer elektromagnetischen Eigenschaft des Dokuments (2) umfasst.

2. Verfahren nach Anspruch 1, **dadurch gekennzeichnet, dass** die Datensätze (9, 10, 119-n, 120-k) der erfassten Eigenschaften die Messergebnisse der Messverfahren (7, 8) sind oder aus diesen abgeleitet werden, wobei ein mit den Messergebnissen möglicherweise verknüpfter Inhalt weder ermittelt, noch ausgewertet, noch verifiziert oder abgeglichen wird.

3. Verfahren nach einem der Ansprüche 1 bis 2, **dadurch gekennzeichnet, dass** zusätzlich mittels eines Kommunikationsverfahrens in der elektronischen Schaltung (5) gespeicherte Daten aus dem Dokument (2) ausgelesen werden und diese Daten als ein weiterer Ausgangsdatensatz in die Berechnung des PUF-Schlüssels (12) mittels der Streuwertfunktion (11) einbezogen werden.

4. Verfahren nach einem der Ansprüche 1 bis 3, **dadurch gekennzeichnet, dass** eine PIN (14) erfasst wird und die PIN (14) als ein weiterer Ausgangsdatensatz genutzt wird, der in die Berechnung des PUF-Schlüssels (12, 12a) mittels der Streuwertfunktion (11) einbezogen wird.

5. Verfahren nach einem der Ansprüche 1 bis 4 ,**dadurch gekennzeichnet, dass** mindestens eine der mindestens zwei Eigenschaften aus einer in dem Sicherheitsdokument grafisch oder elektronisch logisch gespeicherten Information abgeleitet wird, wobei eine Erfassung in der Weise erfolgt, dass die gespeicherte Information in den erfassten Daten nicht enthalten ist oder aus diesen ableitbar und nicht in dem abgeleiteten, die eine der mindestens zwei Eigenschaften des Sicherheitsdokuments repräsentierenden Datensatz enthalten ist.

6. Verfahren nach Anspruch 5 ,**dadurch gekennzeichnet, dass** das Erfassen der einen der mindestens zwei Eigenschaft ein Erfassen einer 2D-Abbildung umfasst, wobei eine Ebene des Sicherheitsdokuments unscharf auf eine 2D-Bilderfassungseinrichtung abgebildet und von dieser erfasst wird, sodass die in der Ebene des Sicherheitsdokuments grafisch gespeicherte Information nicht aus der erfassten 2D-Abbildung ableitbar ist.

7. Verfahren nach einem der Ansprüche 1 bis 6, **dadurch gekennzeichnet, dass** die Streuwertfunktion (11) eine Einwegfunktion ist.

8. Verfahren nach einem der Ansprüche 1 bis 7, **dadurch gekennzeichnet, dass** von dem Lesegerät (1) über eine Schnittstelle ein externer Code (160) erfasst wird, der als ein zusätzlicher Ausgangswerte-Datensatz in die Berechnung des PUF-Schlüssels (12) mittels der Streuwertefunktion (11) mit einbezogen wird.

9. Verfahren nach einem der Ansprüche 1 bis 8, **dadurch gekennzeichnet, dass** mindestens eine der mindestens zwei erfassten Eigenschaften ein physikalisch nicht nachbildbares Merkmal ist.

10. Verfahren nach einen der Ansprüche 1 bis 9, **dadurch gekennzeichnet, dass** der PUF-Schlüssel (12) verwendet wird, um in dem elektronischen Schaltkreis (5) gespeicherte Daten für eine Kommunikation mit einer Gegenstelle (161) zu verschlüsseln.

11. Verfahren nach Anspruch 10, **dadurch gekennzeichnet, dass** die zur PUF-Schlüsselerzeugung notwendigen Schritte einschließlich der Erfassung der Eigenschaften des Dokuments wiederholt ausgeführt werden, solange eine verschlüsselte Kommunikation mit der Gegenstelle (161) unterhalten wird.

12. Lesegerät (1) zum Erzeugen eines PUF-Schlüssels (12), welches mindestens zwei Messeinrichtungen (31, 32), die unterschiedliche Eigenschaften eines Dokuments (2) erfassen können und in Form eines Datensatzes (9, 10, 119-n, 120-k) bereitstellen, sowie eine Auswerteeinrichtung (33) umfasst, die ausgebildet ist, unter Verwendung einer Streuwertfunktion oder eines Streuwertalgorithmus in den PUF-Schlüssel (12) aus den mindestens zwei Datensätzen (9, 10, 119-n, 120-k) zu errechnen,
**dadurch gekennzeichnet, dass**
eine Messeinrichtung (31) der mindestens zwei Messeinrichtungen (31, 32) ausgebildet ist, ein optisches Messverfahren (7) zum Ermitteln einer optischen Eigenschaft auszuführen, und eine andere Messeinrichtung (32) der mindestens zwei Messeinrichtungen (31, 32) ausgebildet ist, ein elektromagnetisches Messverfahren (8) zum Ermitteln einer elektromagnetischen Eigenschaft des Dokuments (2) auszuführen.

13. Vorrichtung nach Anspruch 12, **dadurch gekennzeichnet, dass** eine der mindestens zwei Messeinrichtungen ausgebildet ist, zumindest einen Bereich des Sicherheitsdokuments optisch zu erfassen, wobei eine Abbildungsoptik der mindestens einen Erfassungseinrichtung ausgebildet ist, den Bereich nicht vollständig scharf auf eine 2D-Bilderfassungseinrichtung abzubilden.

14. Vorrichtung nach einem der Ansprüche 12 oder 13, **dadurch gekennzeichnet, dass** die Abbildungsoptik ein Mikrolinsenarray umfasst, dessen Mirkolinsen unterschiedliche Brennweiten aufweisen, sodass von einem erfassten Bereich einer Ebene des Sicherheitsdokuments nur einzelne Gebiete oder einzelne Punkte oder gar keine Gebiete oder gar keine Punkte des erfassten Bereichs in eine Bildebene abgebildet werden, die mit einer Erfassungsebene der 2D-Bilderfassungeinrichtung zusammenfällt, wobei die Gebiete oder Punkte, deren Bildebene gegebenenfalls mit der Erfassungsebene zusammenfallen, so in der Ebene des Dokuments angeordnet sind, dass eine in der Ebene gespeicherte grafische Information anhand der in den scharf abgebildeten Gebieten oder scharf abgebildeten Punkten dargestellten Anteile diese Information nicht ableitbar ist.

## Claims

1. A method for providing a PUF key (12, 12a) comprising the following steps:
providing a document (2), which comprises at least one electronic circuit (5);
providing a reader (1);
detecting at least two properties of the document (2) with the aid of the reader (1), wherein a data set (9, 10, 119-n, 120-k) is provided for each detected property and represents the detected property, wherein the at least two properties are detected by means of different determination methods, and
calculating the PUF key (12, 12a) by means of an erratic value function which uses the data sets (9, 10, 119-n, 120-k) provided during the step of detecting the properties as starting values,
**characterised in that**
one of the least two determination methods comprises an optical measurement method (7) for determining an optical property and another of the at least two determination methods comprises an electromagnetic measurement method (8) for determining an electromagnetic property of the document (2).

2. The method according to claim 1, **characterised in that** the data sets (9, 10, 119-n, 120-k) of the detected properties are the measurement results of the measurement methods (7, 8) or are derived therefrom, wherein a content possibly linked to the measurement results is neither determined, nor evaluated, nor verified or reconciled.

3. The method according to either one of claims 1 or 2, **characterised in that** data stored in the electronic circuit (5) are additionally read from the document (2) by means of a communications method, and these data are included as a further starting data set in the calculation of the PUF key (12) by means of the erratic value function (11).

4. The method according to any one of claims 1 to 3, **characterised in that** a PIN (14) is detected and the PIN (14) is used as a further starting data set, which is included in the calculation of the PUF key (12, 12a) by means of the erratic value function (11).

5. The method according to any one of claims 1 to 4, **characterised in that** at least one of the at least two properties is derived from a piece of information logically stored graphically or electronically in the security document, wherein a detection process is performed in such a way that the stored information is not contained in the detected data or can be derived therefrom and is not contained in the derived data set representing one of the at least two properties of the security document.

6. The method according to claim 5, **characterised in that** the detection of the one of the at least two properties comprises a detection of a 2D image, wherein a plane of the security document is projected unfocused onto a 2D image capturing device and is detected thereby, such that the information stored graphically in the plane of the security document cannot be derived from the detected 2D image.

7. The method according to any one of claims 1 to 6, **characterised in that** the erratic value function (11) is a one-way function.

8. The method according to any one of claims 1 to 7, **characterised in that** an external code (160) is detected by the reader (1) via an interface, which code is included as an additional starting value data set in the calculation of the PUF key (12) by means of the erratic value function (11).

9. The method according to any one of claims 1 to 8, **characterised in that** at least one of the at least two detected properties is a physical feature that cannot be reproduced.

10. The method according to any one of claims 1 to 9, **characterised in that** the PUF key (12) is used to encrypt data stored in the electronic circuit (5) for communication with a remote station (161).

11. The method according to claim 10, **characterised in that** the steps necessary for generating the PUF key, including the detection of the properties of the document, are performed repeatedly until encrypted communication with the remote station (161) is maintained.

12. A reader (1) for generating a PUF key (12) which reader comprises at least two measuring units (31, 32), which can detect different properties of a document (2) and can provide these properties in the form of a data set (9, 10, 119-n, 120-k), and an evaluation unit (33), which is designed to perform a calculation on the basis of the at least two data sets (9, 10, 119-n, 120-k) with use of an erratic value function or an erratic value algorithm in the PUF key (12),
**characterised in that**
one measuring device (31) of the at least two measuring devices (31, 32) is configured to carry out an optical measurement method (7) for determining an optical property, and another measuring device (32) of the at least two measuring devices (31, 32) is configured to carry out an electromagnetic measurement method (a) for determining an electromagnetic property of the document (2).

13. The device according to claim 12, **characterised in that** one of the at least two measuring units is configured to optically detect at least one region of the security document, wherein an imaging optics of the at least one detection device is configured to image said region in a not entirely focused manner onto a 2D image capturing device.

14. The device according to any one of claims 12 or 13, **characterised in that** the imaging optics comprises a microlens array, the microlenses of which have different focal lengths, such that, of a detected region of a plane of the security document, only individual areas or individual points or even no areas or even no points of the detected region are imaged in an image plane that is coincident with a detection plane of the 2D image capturing device, wherein the areas or points of which the image planes possibly are coincident with the detection plane are arranged in the plane of the document such that a piece of graphical information stored in the plane cannot be derived on the basis of the portions of this information presented in the sharply imaged areas or sharply imaged points.

## Revendications

1. Procédé servant à mettre à disposition une clé PUF (fonction non duplicable physiquement) (12, 12a), comprenant les étapes ;
de mise à disposition d'un document (2), qui comprend au moins un circuit (5) électronique ;
de mise à disposition d'un appareil de lecture (1) ;
de détection d'au moins deux propriétés du document (2) à l'aide de l'appareil de lecture (1), dans lequel pour chaque propriété détectée un jeu de données (9, 10, 119-n, 120-k) est mis à disposition, qui représente la propriété détectée, dans lequel les au moins deux propriétés sont détectées au moyen de procédés de détermination différents, et
de calcul de la clé PUF (12, 12a) au moyen d'une fonction de valeur de dispersion, qui utilise en tant que valeurs de départ les jeux de données (9, 10, 119-n, 120-k) mis à disposition lors de la détection des propriétés, **caractérisé en ce que**
un des au moins deux procédés de détermination comprend un procédé de mesure (7) optique servant à déterminer une propriété optique et un autre des au moins deux procédés de détermination comprend un procédé de mesure (8) électromagnétique servant à déterminer une propriété électromagnétique du document (2).

2. Procédé selon la revendication 1, **caractérisé en ce que** les jeux de données (9, 10, 119-n, 120-k) des propriétés détectées sont les résultats de mesure des procédés de mesure ou en sont dérivés, dans lequel un contenu éventuellement combiné aux résultats de mesure n'est ni déterminé, ni évalué, ni vérifié ni comparé.

3. Procédé selon l'une quelconque des revendications 1 à 2, **caractérisé en ce que** des données mémorisées dans le circuit (5) électronique issues du document (2) sont lues en supplément au moyen d'un procédé de communication et lesdites données sont intégrées en tant qu'un autre jeu de données de départ dans le calcul de la clé PUF (12) au moyen de la fonction de valeur de dispersion (11).

4. Procédé selon l'une quelconque des revendications 1 à 3, **caractérisé en ce qu'**un PIN (14) est détecté et le PIN (14) est utilisé en tant qu'un autre jeu de données de départ, qui est intégré dans le calcul de la clé PUF (12, 12a) au moyen de la fonction de valeur de dispersion (11) .

5. Procédé selon l'une quelconque des revendications 1 à 4, **caractérisé en ce qu'**au moins une des au moins deux propriétés est dérivée d'une information mémorisée de manière graphique ou électronique et logique dans le document de sécurité, dans lequel une détection est effectuée d'une manière telle que l'information mémorisée n'est pas contenue dans les données détectées ou peut être dérivée sur la base de ces dernières et n'est pas contenue dans le jeu de données dérivé, représentant une des au moins deux propriétés du document de sécurité.

6. Procédé selon la revendication 5, **caractérisé en ce que** la détection d'une des au moins deux propriétés comprend une détection d'une reproduction 2D, dans lequel un plan du document de sécurité est reproduit de manière floue sur un système de détection d'images 2D et est détecté par ce dernier si bien que l'information mémorisée de manière graphique dans le plan du document de sécurité ne peut pas être dérivée de la reproduction 2D détectée.

7. Procédé selon l'une quelconque des revendications 1 à 6, **caractérisé en ce que** la fonction de valeur de dispersion (11) est une fonction à usage unique.

8. Procédé selon l'une quelconque des revendications 1 à 7, **caractérisé en ce qu'**est détecté par l'appareil de lecture (1) par l'intermédiaire d'une interface un code (160) externe, qui est intégré en tant qu'un jeu de données de valeurs de départ supplémentaire dans le calcul de la clé PUF (12) au moyen de la fonction de valeur de dispersion (11).

9. Procédé selon l'une quelconque des revendications 1 à 8, **caractérisé en ce qu'**au moins une des au moins deux propriétés détectées est une caractéristique non reproductible physiquement.

10. Procédé selon l'une quelconque des revendications 1 à 9, **caractérisé en ce que** la clé PUF (12) est utilisée pour crypter dans le circuit de commutation (5) électronique des données mémorisées en vue d'une communication avec un emplacement distant (161).

11. Procédé selon la revendication 10, **caractérisé en ce que** les étapes nécessaires pour la génération de la clé PUF y compris la détection des propriétés du document sont exécutées de manière répétée tant qu'une communication cryptée est maintenue avec l'emplacement éloigné (161).

12. Appareil de lecture (1) servant à générer une clé PUF (12), qui comprend au moins deux systèmes de mesure (31, 32), qui peuvent détecter des propriétés différentes d'un document (2) et les mettent à disposition sous la forme d'un jeu de données (9, 10, 119-n, 120-k), ainsi qu'un système d'analyse (33), qui est réalisé pour calculer en utilisant une fonction de valeur de dispersion ou un algorithme de valeur de dispersion la clé PUF (12) à partir des au moins deux jeux de données (9, 10, 119-n, 120-k),
**caractérisé en ce que**
un système de mesure (31) des au moins deux systèmes de mesure (31, 32) est réalisé pour exécuter un procédé de mesure (7) optique servant à déterminer une propriété optique, et un autre système de mesure (32) des au moins deux systèmes de mesure (31, 32) est réalisé pour exécuter un procédé de mesure (8) électromagnétique servant à déterminer une propriété électromagnétique du document (2).

13. Dispositif selon la revendication 12, **caractérisé en ce qu'**un des au moins deux systèmes de mesure est réalisé pour détecter de manière optique au moins une zone du document de sécurité, dans lequel une optique de reproduction de l'au moins un système de détection est réalisée pour reproduire la zone de manière non totalement nette sur un système de détection d'images 2D.

14. Dispositif selon l'une quelconque des revendications 12 ou 13, **caractérisé en ce que** l'optique de reproduction comprend un réseau de microlentilles, dont les microlentilles présentent des focales différentes si bien que diverses régions ou divers points seulement sont reproduits voire aucune région ou voire aucun point de la zone détectée ne sont reproduits par une zone détectée d'un plan du document de sécurité, dans un plan d'image, qui coïncide avec un plan de détection du système de détection d'images 2D, dans lequel les régions ou points, dont le plan d'image coïncide également avec le plan de détection sont disposés dans le plan de document de telle sorte qu'une information graphique mémorisée dans le plan ne peut pas être dérivée à l'aide des parties de ladite information représentées dans les régions reproduites de manière nette ou les points reproduits de manière nette.
